# EUROPÄISCHE PATENTSCHRIFT

(11) **EP 0 868 678 B1**
(45) Veröffentlichungstag und Bekanntmachung des Hinweises auf die Patenterteilung: **23.06.1999**
(21) Anmeldenummer: 96944600.4
(22) Anmeldetag: 19.12.1996
(51) Int. Cl.: G02C 5/22

(54) **VERFAHREN ZUR HERSTELLUNG EINES BRILLENSCHARNIERS**
METHOD OF PRODUCING A SPECTACLES HINGE
PROCEDE DE PRODUCTION DE CHARNIERES POUR MONTURES DE LUNETTES

(30) Priorität: 20.12.1995 DE 19547817
(43) Veröffentlichungstag der Anmeldung: 07.10.1998
(73) Patentinhaber: OBE Ohnmacht & Baumgärtner GmbH & Co. KG, 75228 Ispringen (DE)
(72) Erfinder: WAGNER, Reiner, D-75228 Ispringen (DE)
(74) Vertreter: Gleiss, Alf-Olav, Dr.jur. Dipl.-Ing.
(86) Internationale Anmeldenummer: EP9605720
(87) Internationale Veröffentlichungsnummer: WO9722902

(56) Entgegenhaltungen:
- EP-A- 0 100 754
- EP-A- 0 295 560
- DE-A- 2 342 314
- DE-A- 19 515 495
- US-A- 4 283 811

## Beschreibung

Die Erfindung betrifft ein Verfahren zur Herstellung eines Scharniers für Brillen mit einem zwei-rolligen Scharnierteil, das zwei parallel zueinander angeordnete Schenkel und eine diese beiden Schenkel verbindende Grundfläche aufweist.

Solche Scharnierteile sind aus dem Stand der Technik bekannt. Sie werden dadurch hergestellt, daß zunächst ein Profilmaterial entsprechend der Breite des Scharnierteils abgesägt wird. Anschließend wird in diesen abgesägten Block eine Bohrung eingebracht, wobei eine Hälfte der Bohrung mit einem Gewinde versehen wird. Abschließend wird radial zur Bohrung ein Schlitz eingesägt, der die zwei Schenkel des zwei-rolligen Scharnierteils ausbildet.

In diesen Zwischenraum greift später das Gegenstück des Scharnierteils ein, wobei es mittels einer Schraube schwenkbar fixiert wird. Die Schraube durchgreift dabei eine Bohrung des Scharnierteils, eine Bohrung des Gegenstücks und ist in das Gewinde der anderen Bohrung des Scharnierteils eingeschraubt.

Dieses Fertigungsverfahren hat einerseits den Nachteil, daß sehr teueres Profilmaterial verwendet wird. Darüber hinaus sind die erreichbaren Taktzeiten nicht befriedigend, wobei insbesondere das Einbringen des Schlitzes im Herstellungsprozess "den Flaschenhals" bildet.

Ein weiterer wichtiger und nicht vernachlässigbarer Gesichtspunkt ist darin zu sehen, daß bei jedem Bearbeitungsschritt Späne anfallen. Diese sollen recycelt werden, wobei dann die Schwierigkeit darin besteht, das an den Spänen anhaftende Öl abzuscheiden. Darin liegt ein großer Nachteil der zerspanenden Herstellungsweise, der zu einer nicht unbeträchtlichen Kostenlast für die Entsorgung führt.

Ein weiterer Nachteil ist darin zu sehen, daß die beim Bohren beziehungsweise Sägen oder Schlitzen entstehenden Oberflächen eine Oberflächenrauhigkeit aufweisen, die sich ungünstig auf die Funktion des Scharniers auswirkt. Bei der Verwendung bestimmter Materialien (beispielsweise bleifreies Neusilber) tritt zusätzlich eine Gratbildung auf, die eine Nachbearbeitung erforderlich macht.

Die Aufgabe der Erfindung besteht deshalb darin, ein Verfahren zur Herstellung eines Federscharniers anzugeben, das einerseits kostengünstig ist und andererseits eine hohe Taktrate erlaubt. Desweiteren sollen die bei der Herstellung anfallenden Abfälle auf einfache Weise wiederverwertbar sein.

Diese Aufgabe wird durch das in Anspruch 1 angegebene Verfahren gelöst. Dadurch, daß das Scharnierteil aus einem bandförmigen Material ausgestanzt und dann gebogen wird, ist der Herstellungsvorgang stark vereinfacht, so daß mit einfacheren Maschinen und einer höheren Taktrate sehr kostengünstig gefertigt werden kann. Desweiteren wird die Herstellung im wesentlichen "ölfrei" durchgeführt, so daß beim Recycling der Abfälle keine Ölabscheidung mehr notwendig ist. Zudem müssen zur Reinigung der Teile nur sehr geringe Mengen an Lösungsmitteln verwendet werden, was dem Umweltschutz zugute kommt.

Darüber hinaus lassen sich auch nicht oder nur schwer zerspanbare Materialien, wie rostfreier Stahl, Titan oder Monel, verarbeiten. Zudem können auch bleifreie Materialien verarbeitet werden, was dem Umweltschutz dient. Somit lassen sich auch filigrane Scharniere herstellen.

Gegenüber der bisherigen zerspanenden Herstellungsweise erreicht man mit dem Verfahren gemäß Anspruch 1 eine Vervierfachung beziehungsweise Versechsfachung der Taktrate, wobei beispielsweise bei einer vollautomatischen spanenden Fertigung auf einer Maschine 20 bis 30 Scharnierteile pro Minute ausgeworfen werden, während bei dem Verfahren nach Anspruch 1 etwa 120 Stück pro Minute herstellbar sind.

Ein weiterer Vorteil ist darin zu sehen, daß mittels einer Komplettfertigung an einem Metallstreifen eine beträchtliche Einsparung an Maschinen erreichbar ist. Die Fertigung selbst läßt sich im wesentlichen mit einem Werkzeug bewerkstelligen, was unter anderem auch die Flexibilität der Maschine erhöht, da mit wenig Aufwand umgerüstet werden kann.

Weitere Vorteile ergeben sich aus den in den Unteransprüchen angegebenen Weiterbildungen der Erfindung.

Mit Bezug auf die Zeichnung wird im folgenden die Erfindung anhand eines Ausführungsbeispieles näher beschrieben. Dabei zeigen:
- Figur 1a: eine schematische Seitenansicht eines Scharnierteils,
- Figur 1b: schematisch eine Vorderansicht des in Figur 1a gezeigten Scharnierteils,
- Figur 2: schematisch die Abfolge der einzelnen Herstellungsschritte,
- Figur 3: eine abgewandelte Form eines ausgestanzten Scharnierteiles,
- Figur 4: eine perspektivische Darstellung eines Federscharniers mit einem zwei-rolligen Scharnierteil, und
- Figur 5: eine perspektivische Darstellung eines Brillenscharniers mit einem zwei-rolligen Scharnierteil.

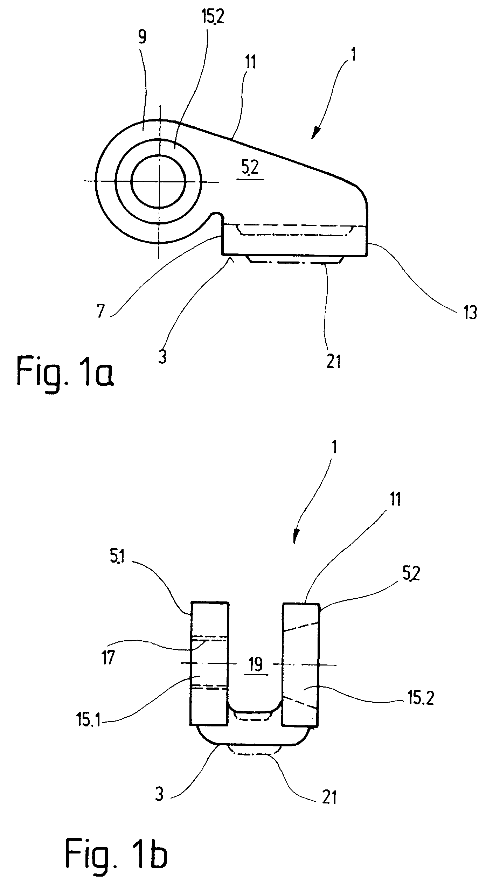

In Figur 1 ist ein bereits fertig hergestelltes Scharnierteil 1 dargestellt. Dieses ist üblicherweise fest mit einer Brillenfassung verbunden und dient zur drehbeweglichen Verbindung eines Brillenbügels mit der Brillenfassung.

Das im Querschnitt U-förmige Scharnierteil 1 weist eine Grundfläche 3 auf, von der aus, wie in Figur 1b deutlich zu erkennen, zwei Schenkel 5.1 und 5.2 entspringen. In Längsrichtung erstrecken sich diese Schenkel 5 über einen Rand 7 der Grundfläche 3 hinaus, wobei dieser überstehende Abschnitt 9 kreisbogenförmig abschließt. In Figur 1a ist desweiteren deutlich zu erkennen, daß eine obere Kante 11 der Schenkel 5 vom Abschnitt 9 beginnend zu dem dem Rand 7 gegenüberliegenden Rand 13 der Grundfläche 3 abfällt.

Im überstehenden Abschnitt 9 der Schenkel 5 sind zueinander fluchtende Bohrungen 15.1 und 15.2 vorgesehen, wobei eine Bohrung 15.1 mit einem Gewinde 17 versehen ist. Die gegenüberliegende Bohrung 15.2 weist dagegen einen Bohrungsdurchmesser auf, der sich von der dem Schenkel 15.1 zugewandten Seite in Längsrichtung der Bohrung nach außen vergrößert.

Die beiden Bohrungen 15 dienen zur Aufnahme einer nicht dargestellten Schraube, deren Kopf versenkt in der Bohrung 15.2 liegt und deren Gewinde mit dem Gewinde der Bohrung 15.1 zusammenwirkt. Zur drehbeweglichen Befestigung des Brillenbügels an der Brillenfassung erstreckt sich das Brillenbügelscharnierteil mit seinem ein Scharnierauge aufweisenden Abschnitt in einen von den beiden Schenkeln 5 gebildeten Zwischenraum 19. Dabei durchgreift die Schraube dieses Scharnierauge und fixiert somit den Brillenbügel.

Figur 1 läßt noch einen gestrichelt angedeuteten, erhabenen Bereich 21 erkennen, der von der Unterseite der Grundfläche 3 hervorragt. Dieser optional vorgesehene Abschnitt 21 wird als Schweißpunkt benutzt, wenn das Scharnierteil 1 auf einen mit der Brillenfassung verbundenen Steg im Schweißverfahren aufgebracht wird.

Soll das Scharnierteil 1 aufgelötet werden, so wird statt dem Schweißpunkt eine -nicht gezeigte- Riffelung ausgebildet, die den Fluß des Lötmittels fördert.

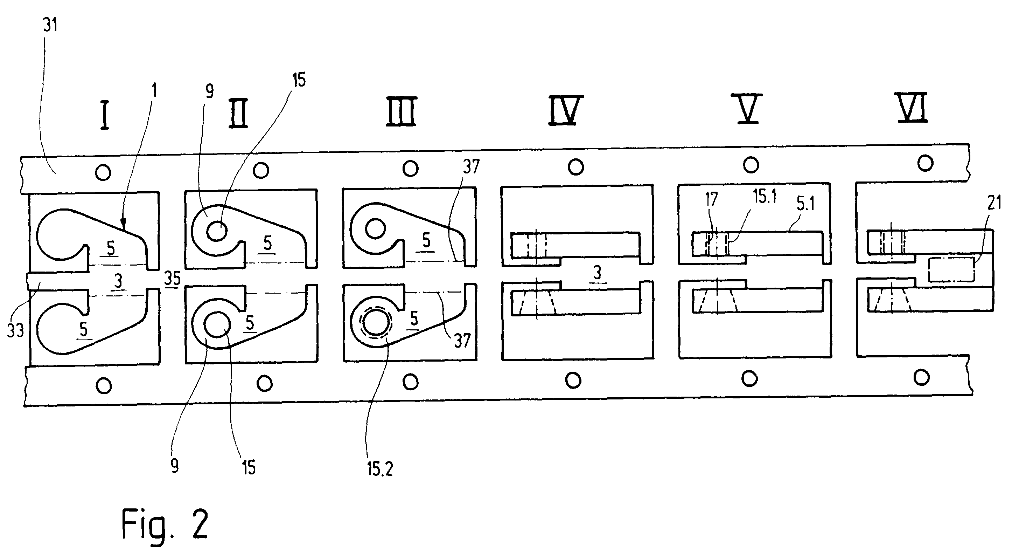

Die Herstellung eines solchen Scharnierteils 1 soll nun anhand der Figur 2 beschrieben werden.

Als Ausgangsmaterial zur Herstellung des Scharnierteils 1 dient ein Metallband 31, das aus einem beliebigen beschichteten oder unbeschichteten Metall, beispielsweise Titan, Monel (hochnickelhaltige Legierung), Stahl oder bleifreiem Neusilber besteht. Die Dicke dieses Metallbandes 31 wird entsprechend der gewünschten Wandstärke, beispielsweise der Schenkel 5 gewählt, vorzugsweise 0,6 mm bis 1 mm.

Als besonders vorteilhaft hat sich die Verwendung von bleifreiem Neusilber herausgestellt, das mit den bisherigen Verfahren nur schwer handhabbar ist.

Desweiteren fallen die bei der Verarbeitung von bleihaltigen Materialien geforderten Umwelschutzanforderungen weg, was zu Kosteneinsparungen führt.

Im ersten Herstellungsschritt I wird zunächst die Grundform des Scharnierteils 1 im "aufgeklappten Zustand" freigestanzt, wobei zwei Stege 33 und 35 stehen bleiben. Sie halten das Scharnierteil 1 weiterhin am Metallstreifen 31.

Anschließend wird im Herstellungsschritt II in die Abschnitte 9 der Schenkel 5 Bohrungen 15 eingebracht. Dies kann einerseits durch Bohren oder andererseits durch Stanzen erfolgen.

Die in Figur 1b dargestellte konische Aufweitung der Bohrung 15.2 wird in Schritt III durchgeführt. Die gestrichelte Linie soll dabei diese Aufweitung andeuten.

Im nächsten Schritt IV werden dann die beiden Schenkel 5 entlang der strichpunktierten Linien 37 nach oben geklappt, so daß sie etwa einen Winkel von 90° mit der Grundfläche einschließen.

In Schritt V wird mittels eines Gewindeschneiders oder eines Gewinderollers das Gewinde 17 in die Bohrung 15.1 des Schenkels 5.1 eingebracht. Damit ist das Scharnierteil 1 im wesentlichen fertig.

In Schritt VI wird bei Bedarf der zum Schweißen benötigte Abschnitt 21 oder eine Riffelung in die Grundfläche 3 eingedrückt.

Abschließend ist es dann nur noch notwendig, die Verbindung des Scharnierteil 1 mit dem Metallstreifen 31 über die Stege 33 und 35 zu durchtrennen. Dieses ist jedoch in Figur 2 nicht mehr dargestellt. Entscheidend bei der Herstellung des Scharnierteils 1 ist, daß es während der Schritte I-VI am Metallstreifen befestigt bleibt. Dies erhöht die in großem Maße die die Handhabbarkeit und erleichtert die Bearbeitung. Desweiteren läßt sich das komplette Verfahren in einer Maschine durchführen.

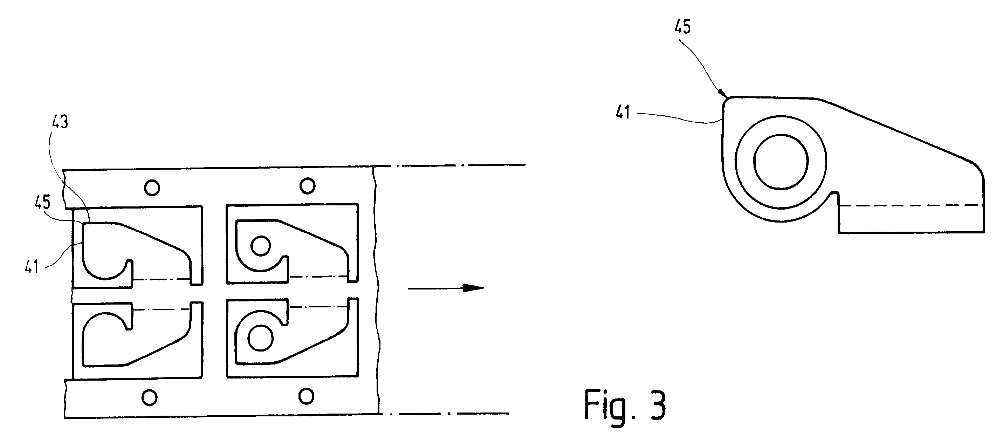

Durch einfache Variation des Stanzwerkzeuges kann auch ein Scharnierteil für ein Federscharnier hergestellt werden. In Figur 3 ist ein entsprechend ausgestanztes Teil dargestellt, wobei deutlich zu erkennen ist, daß der überstehende Abschnitt 9 zwei gerade Flächen 41, 43 aufweist. Die sich dadurch ergebende Nase 45 wird bei Federscharnieren zur Erzielung eines Schnappeffekts benötigt.

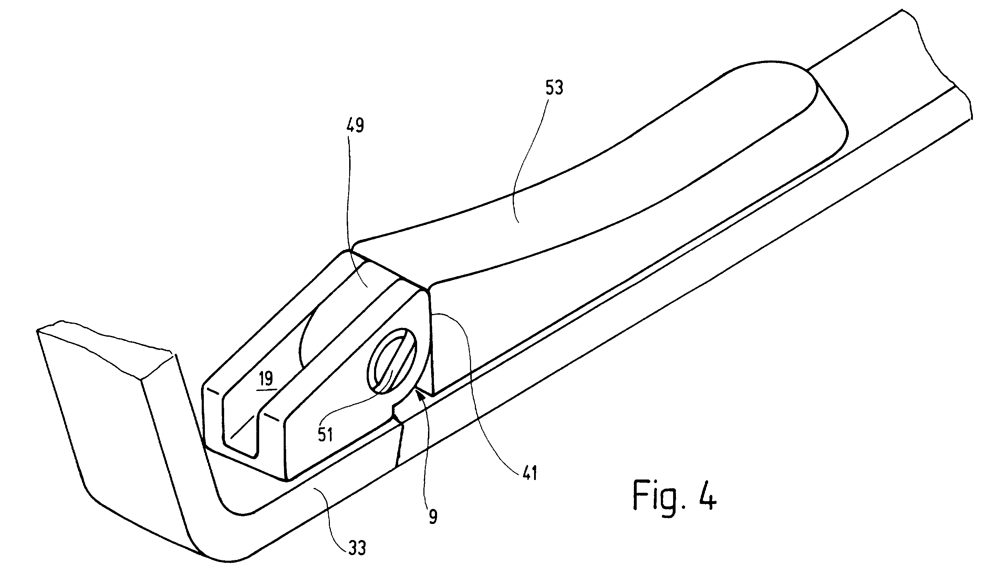

Figur 4 zeigt in perspektivischer Ansicht nochmals das zwei-rollige Scharnierteil, das auf dem Steg 33 aufgebracht ist. In den Zwischenraum 19 ragt dabei ein Scharnierteil-Gegenstück 49, das mittels einer Schraube 51 am Scharnierteil 1 drehbeweglich angebracht ist.

Das Scharnierteil-Gegenstück 49 ragt darüber hinaus in ein Gehäuse 53 eines Federscharniers hinein, wo es in bekannter Weise verschieblich gehalten wird.

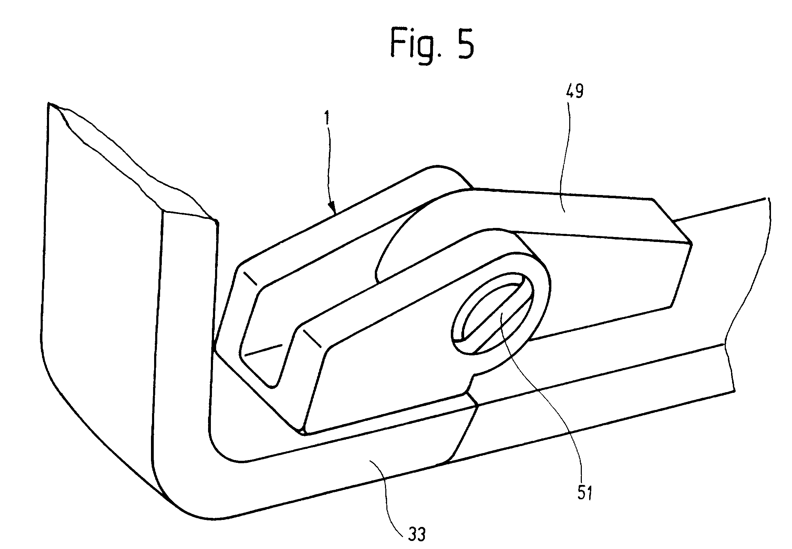

Figur 5 zeigt ebenfalls ein Scharnierteil 1 in perspektivischer Ansicht, wobei das Scharnierteil-Gegenstück 49 jedoch direkt auf einem Brillenbügel befestigt ist. Hierbei handelt es sich also um ein normales Brillenscharnier.

Mit Hilfe des beschriebenen Stanz-Biege-Verfahrens erhält man somit ein Scharnierteil, das auf sehr einfache Weise in wenigen Verfahrensschritten herstellbar ist. Darüberhinaus sind die Innenflächen der Schenkel 5, die als Laufflächen des Scharniers dienen, unbearbeitet. damit bleibt die hohe Oberflächenqualität des Ausgangsmaterials erhalten, was zu einem guten Drehverhalten des Bügels führt.

Selbstverständlich ist es denkbar, die vorgenannte Bearbeitungsfolge zu variieren oder beispielsweise einzelne Bearbeitungsschritte, wie das Aufweiten der Bohrung, wegzulassen.

Festzuhalten ist desweiteren, daß sich unterschiedliche Ausführungsformen eines Scharnierteils mit einem Werkzeug herstellen lassen. Die bei der bisherigen Herstellung aus Profilen notwendigen hohen Kosten für Maschinen können auf einen Bruchteil gesenkt werden.

## Patentansprüche

1. Verfahren zur Herstellung eines Brillenscharniers mit einem zwei-rolligen Scharnierteil, das zwei Schenkel und eine dazwischen liegende Grundfläche aufweist, mit den Schritten:
Ausstanzen des Scharnierteils (1) aus einem bandförmigen Material (31);
Einbringen jeweils eines Durchbruchs (15.1, 15.2) in die Schenkel (5);
Umbiegen der beiden Schenkel (5) um 90°, derart, daß die beiden Durchbrüche (15.1,15.2) fluchten, und
Ausbilden eines Gewindes in einem der beiden Durchbrüche (15.1).

2. Verfahren nach Anspruch 1, **dadurch gekennzeichnet**, daß ein Durchbruch (15.2) nachbearbeitet, insbesondere an einer Seite aufgeweitet wird.

3. Verfahren nach einem der vorhergehenden Ansprüche, **dadurch gekennzeichnet**, daß in die Grundfläche (3) ein Schweißpunkt (21) oder eine Lötriffelung eingeprägt wird.

4. Verfahren nach einem der vorhergehenden Ansprüche, **dadurch gekennzeichnet**, daß als bandförmiges Material (31) ein Metall, vorzugsweise Titan oder rostfreier Stahl, verwendet wird.

5. Verfahren nach einem der vorhergehenden Ansprüche, **dadurch gekennzeichnet**, daß als bandförmiges Material ein Flachbandmaterial mit einer Dicke von 0,6 bis 1 Millimeter verwendet wird.

6. Verfahren nach einem der vorhergehenden Ansprüche, **dadurch gekennzeichnet**, daß als bandförmiges Material ein bleifreies Material, vorzugsweise Neusilber verwendet wird.

7. Verfahren nach einem der vorhergehenden Ansprüche, **dadurch gekennzeichnet**, daß das Scharnierteil erst nach der kompletten Bearbeitung vom Metallstreifen (31) getrennt wird.

## Claims

1. A method of manufacturing a spectacles hinge with a two-roll hinge part having two arms and a base surface arranged therebetween, comprising the steps of:
- stamping the hinge part (1) out of a strip-type material (31);
- making a hole (15.1, 15.2) in each of the arms (5);
- bending the two arms (5) through 90° in such a manner that the two holes (15.1, 15.2) are aligned, and
- forming a thread in one of the two holes (15.1).

2. A method according to claim 1, characterised in that one hole (15.2) is subsequently machined, in particular widened on one side.

3. A method according to any one of the preceding claims, characterised in that a weld point (21) or a solder channel is imprinted in the base surface (3).

4. A method according to any one of the preceding claims, characterised in that a metal, preferably titanium or stainless steel, is used for the strip-type material (31).

5. A method according to any one of the preceding claims, characterised in that a flat material with a thickness of 0.6 to 1 millimetre is used as strip-type material.

6. A method according to any one of the preceding claims, characterised in that a lead-free material, preferably nickel silver, is used for the strip-type material.

7. A method according to any one of the preceding claims, characterised in that the hinge part is only separated from the metal strip (31) when machining is complete.

## Revendications

1. Procédé pour réaliser une charnière pour lunettes, comportant une partie de charnière à deux paliers qui présente deux bras et une surface de base reliant ces deux bras, avec les étapes suivantes :
- on poinçonne la partie de charnière (1) à partir d'un matériau en forme de bande (31) ;
- on ménage une traversée respective (15.1, 15.2) dans les bras (5) ;
- on recourbe les deux bras (5) de 90°, de telle sorte que les deux traversées (15.1, 15.2) sont en alignement ; et
- on réalise un taraudage dans l'une des deux traversées (15.1).

2. Procédé selon la revendication 1, caractérisé en ce que l'on procède à une reprise de l'une traversée (15.2), en particulier en l'élargissant sur un côté.

3. Procédé selon l'une quelconque des revendications précédentes, caractérisé en ce que l'on imprime dans la surface de base (3) un point de soudage (21) ou des stries de brasage.

4. Procédé selon l'une quelconque des revendications précédentes, caractérisé en ce que l'on utilise comme matériau en forme de bande (31) un métal, de préférence du titane ou de l'acier inoxydable.

5. Procédé selon l'une quelconque des revendications précédentes, caractérisé en ce que l'on utilise comme matériau en forme de bande un matériau en bande plate d'une épaisseur de 0,6 à 1 mm.

6. Procédé selon l'une quelconque des revendications précédentes, caractérisé en ce que l'on utilise comme matériau en forme de bande un matériau exempt de plomb, de préférence de l'argentan.

7. Procédé selon l'une quelconque des revendications précédentes, caractérisé en ce que l'on sépare la partie de charnière depuis la bande métallique (31) uniquement après usinage complet.
